# EUROPEAN PATENT SPECIFICATION

(11) **EP 0 408 518 B1**
(45) Date of publication and mention of the grant of the patent: **17.03.1993**
(21) Application number: 90830264.9
(22) Date of filing: 12.06.1990
(51) Int. Cl.: F02D 41/14, G01M 15/00

(54) **A method and system for monitoring the operating characteristics of an internal combustion engine with several cylinders, particularly an internal combustion engine with electronic injection**
Verfahren und System zur Überwachung des Betriebsverhaltens einer Mehrzylinder-Brennkraftmaschine, insbesondere einer Brennkraftmaschine mit elektronischer Einspritzung
Méthode et système pour la surveillance de la caractéristique de fonctionnement d'un moteur à combustion interne à plusieurs cylindres, particulièrement avec injection électronique

(30) Priority: 14.06.1989 IT 6748389
(43) Date of publication of application: 16.01.1991
(60) Divisional application: 92108274.9
(73) Proprietor: FIAT AUTO S.p.A., 10135 Torino (IT)
(72) Inventor: Palazzetti, Mario, I-10051 Avigliana, (Torino) (IT); Ponti, Cesare, I-10051 Avigliana, (Torino) (IT)
(74) Representative: Bosotti, Luciano

(56) References cited:
- FR-A- 2 567 962
- GB-A- 2 005 443
- GB-A- 2 197 956
- US-A- 3 871 215
- US-A- 4 683 856
- US-A- 4 705 000
- PATENT ABSTRACTS OF JAPAN, vol. 10, no. 242 (M-509)[2298], 21st August 1986;& JP-A-61 72 844 (MAZDA MOTOR CORP.) 14-04-1986
- NEW DEVELOPMENTS IN POWER TRAIN AND CHASSIS ENGINEERING; STRASSBURG, 3-5.6.1987; p. 16-17 ; p. 32-44

## Description

The present invention relates generally to the monitoring of the operating characteristics of internal combustion engines with several cylinders, particularly internal combustion engines with electronic injection.

In general, in order to enable diagnostic analysis of the operation of engines of this type to be carried out, it is necessary for specific functions to be provided in the electronic unit which controls the injection so as to give an external diagnostic system access to the most significant information relating to the operating conditions of the engine.

A first object of the present invention is to provide this analysis function in a manner which is simple both from the point of view of the production of the electronic control unit (preferably with the use of a control unit in current production) and as regards the diagnostic equipment, without adversely affecting the accuracy of the diagnostic sequence.

The very fact that the control unit can provide the said information relating to the analysis also enables the control unit to be adjusted automatically by means of feedback, possibly in real time, so that the operating parameters can be adjusted following developments in the operating conditions of the engine.

According to the present invention, these and other objects which will become clearer from the following description are achieved by virtue of a method and a system having the characteristics quoted specifically in claims 1 and 4.

The congress paper New Developments in Power Train and Chassis Engineering Strassburg 3-5.6.1987 (p.32-44) describes an experimental practise wherein a combustion (pressure) monitor is installed in each cylinder of a multicylinder engine. A correlation is shown there to exist between leaning the fuel mixture and a so-called "delay" in pressure rising as a result of combustion, which in turn may affect engine running.

The combustion (and especially the pressure) in each cylinder may include relative deviations as shown e.g. in New Developments in Power Train and Chassis Engineering Strassburg 3-5.6.1987 (p.16-17).

Essentially, a system according to the invention operates during a checking stage in which the engine is in neutral (virtually inertial operating conditions, according to criteria which will better be described below) and the accelerator is fully depressed.

In these conditions, the system acts on the fuel-injection function so as to make the engine accelerate and decelerate at full power between two present rates of revolution (for example 1400 and 5800 revs/min). At each acceleration the metering of the fuel is varied so as to achieve a gradual weakening of the mixture.

The condition in which each cylinder begins to have an absence of combustion is detected (by means of a dynamic measurement of the torque delivered by each cylinder). The detection of this lack of combustion, and the identification of the conditions under which it arises, enable the injection system to be analysed thoroughly, particularly as regards the fuel metering limits.

This information can be obtained and used in the engine-design stage, in the calibration and adjustment stage (the tuning stage), and also for an automatic self-adjustment action carried out directly on the injection function under the normal conditions of use of the engine in a vehicle.

Moreover, a system according to the invention enables a lack of combustion which is not linked to the fuel metering to be identified clearly so that conditions of malfunction resulting from disturbances of various origin, for example the improper operation of the ignition system, can be identified.

The invention will now be described, purely by way of non-limiting example, with reference to the appended drawings, in which:
Figure 1 shows schematically, in the form of a graph, a function monitoring the useful torque/braking torque characteristic of each cylinder of an internal combustion engine (for example a four-cylinder engine), and
Figure 2 is a block schematic diagram showing the general structure of a device according to the invention.

The primary source of the signals for use by the processing functions in the currently preferred embodiment of the present invention is a module for the dynamic monitoring of the torque and of the power delivered by the individual cylinders of a motor-vehicle engine M (not illustrated as a whole), produced according to the solution described in Italian patent No. 1 180 045.

This patent describes the construction of a device, herein generally indicated 1, which, by monitoring the angular acceleration and velocity of rotation of the engine M at particular points - or regions - of its rotary travel, is able to provide respective signals C₁(ω), C₂(ω), C₃(ω) and C₄(ω), which are indicative of the torque (useful and/or braking) associated with each cylinder of the engine M. Naturally, implicit reference is made here (purely by way of non-limiting example) to an engine including four cylinders.

More particularly, according to the solution described in Patent No. 1 180 045 cited above, the torque is monitored in virtually inertial conditions, that is to say, whilst the engine is in neutral: the whole being based on the more general criteria described in prior Italian Patent No. 1 155 709.

The monitoring is carried out with the engine M being made to "cycle" through successive acceleration and deceleration phases.

For this purpose, the system according to the invention includes a processing or governing module (2) for carrying out the desired testing or analysis function upon receipt of a command which is applied by the driver (or whoever is performing the test) by means of a push button 3. The receipt of this command causes a subsequent acceleration command, applied by the full depression of the corresponding pedal P (accelerator pedal pushed to the floor continuously with the engine in neutral), to be transferred to the central unit F which controls the fuel injection so as to result in a sequence of successive phases of acceleration and deceleration between two preset rates of rotation (e.g. 1400 and 5800 revs./min).

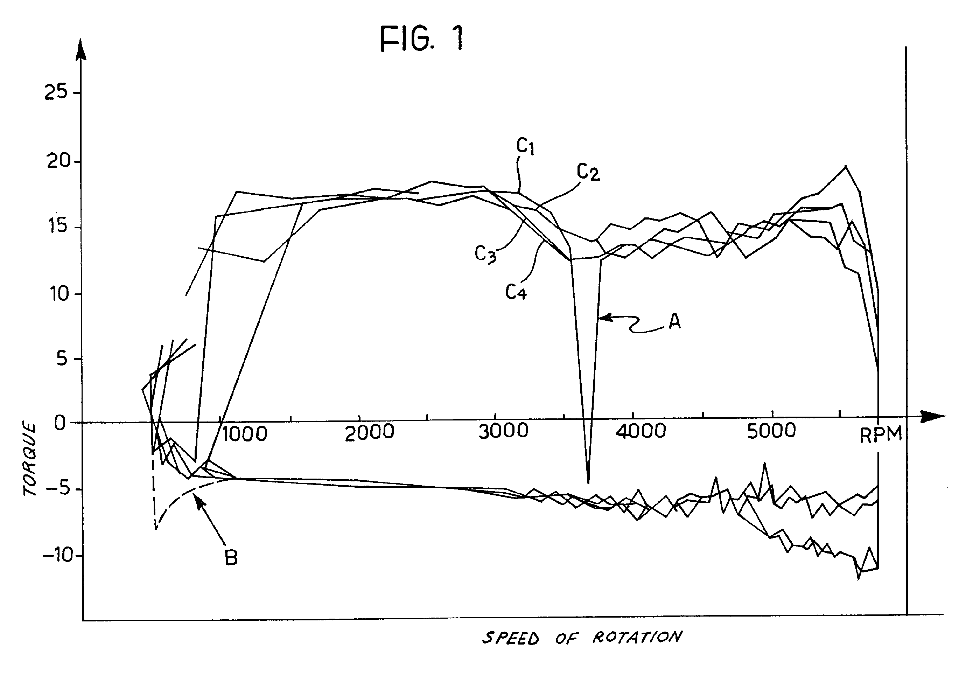

According to criteria described in prior Patent No. 1 180 045, in these conditions, for each cylinder of the engine, the device 1 can output a signal Cᵢ(ω), which corresponds to the graphs shown in Figure 1 (i = 1, 2, 3, 4).

This is a signal which provides a trace of the useful torque (positive ordinate) and the braking torque (negative ordinate) as well as the corresponding powers (by means of the simple processing of the driving torque) as functions of the angular velocity of rotation of the engine (ω). It should, in fact, be noted, that the power signal is obtainable directly from the torque signal simply by its multiplication by the corresponding angular velocity detected.

Any lack of combustion occurring in any one of the cylinders can be detected immediately from the respective graph of Figure 1 and is in the form of a rapid downward flicker A in the signal of the torque (or power) delivered: a cylinder in which there is no combustion does not in fact deliver any useful torque but, on the contrary, has a purely braking effect.

In particular, a lack of combustion may occur only in correspondence with a particular range of values of the rate of rotation ω of the engine. A signal corresponding to the graph of Figure 1 thus enables the range of values of the rate of rotation ω at which lack of combustion occurs, to be identified precisely.

In general, the Applicant has found that, for the purposes of the present invention, the requirements for the precise identification of the values of the angular acceleration of the engine can be fairly relaxed compared with those to which explict reference is made in the previous patent 1 180 045. This is an undoubted advantage since it enables the device 1 to be incorporated in a system according to the invention even with sensors which are not particularly sophisticated and therefore of limited cost.

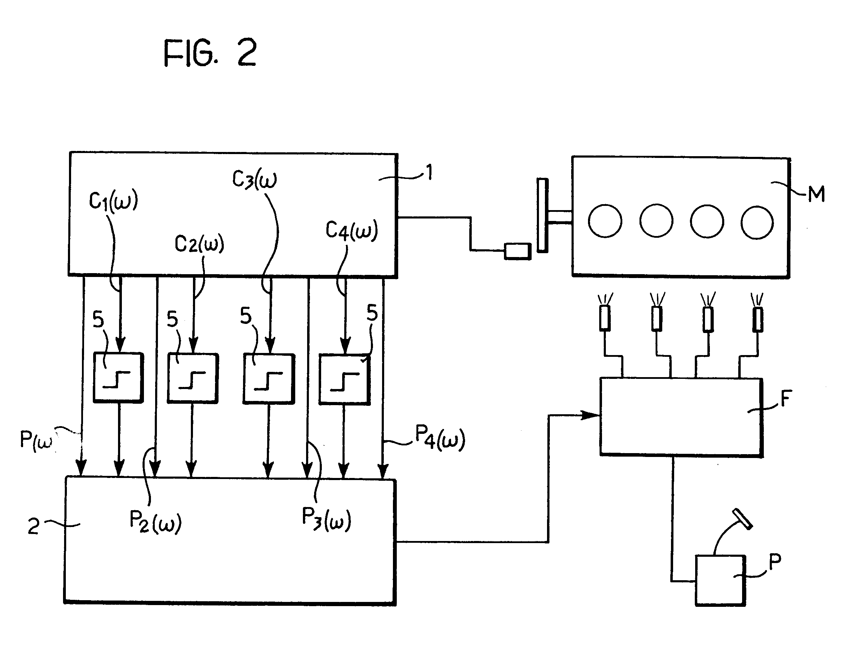

In the block diagram of Figure 2, four threshold functions (which are in fact provided in the software according to criteria which are quite obvious to a skilled programmer) are indicated 5 and can identify a lack of combustion in the various cylinders of the engine, that is they can identify the presence of a drop in useful torque, of the type indicated A in the graph of Figure 1, in the signals output by the device 1.

At the start of the test stage, which is activated by the operation of the push-button 3 (which operation is signalled externally by means of a warning light 7) the module 2 acts on the injection control unit F so as to send a generally rich mixture to all the cylinders.

In these conditions, the detection of any lack of combustion in one or more of the cylinders can immediately be attributed to a defect in systems other than the injection system, for example, in the ignition system. The identification of such an anomaly can therefore be indicated externally immediately.

In the absence of such anomalies, the system according to the invention proceeds with successive cycles of dynamic monitoring of the useful torque and the braking torque delivered by the various cylinders of the engine M with a progressive and gradual weakening of the mixture sent to the various cylinders.

For this purpose it has been found to be advantageous for the duration of the injection to be reduced in steps of 2% for each acceleration-deceleration cycle until a reduction of 60% in the original value has been achieved.

The effect of this gradual weakening of the mixture is manifested sooner or later in lack of combustion in one of the cylinders.

When this is detected, the module 2 acquires the information relating to the conditions (the metering of the mixture, the rate of rotation of the engine, etc.) in which the lack of combustion, etc. took place.

The system according to the invention can thus identify a kind of metering limit or threshold condition (a critical condition) which - for each cylinder - separates the set of parameters for which there is combustion from the set of parameters for which there is a lack of combustion.

When a detection has been made in a particular cylinder, the module 2 acts on the control unit F so that the mixture supplied to the cylinder which was the subject of the detection is enriched again - by a predetermined amount, for example by a 10% increase in the duration of the injection. The cylinder is thus returned safely to normal operating conditions so that it cannot interfere with the monitoring of the other cylinders, particularly at low rates of rotation.

In general, the probability of a lack of combustion occurring in several cylinders of the engine M in exactly the same operating conditions is very low. In any case, the possibility of such a coincidence arising can be minimised by a corresponding reduction in the steps used for the gradual weakening of the mixture.

When lack of combustion has been detected in all the cylinders of the engine the test stage may considered completed.

The information collected during the test stage can be used by the system of the invention in different ways according to the specific applicational requirements and conditions in which the analysis is carried out.

In fact the simple external presentation of the data for use, for example, in modifying the engine parameters at the design stage, can be changed to a diagnostic type of presentation for providing precise reference data to a person carrying out adjustments at the end of the assembly line, or during servicing, to enable the engine to be tuned correctly.

This tuning can, of course, be achieved according to different criteria in dependence on specific operational requirements, for example in order to minimise fuel consumption without giving rise to a lack of combustion or in order to improve the overall performance of the power unit, etc.

Naturally, it is also possible to arrange for the system according to the invention to provide direct feedback, possibly in real time, to the control unit F so as to achieve automatic calibration (for example in order to adjust the operating conditions of the various cylinders and make them uniform, the injection function being modified differently in the individual cylinders, if necessary etc).

The aforesaid processing and display functions, as well as any feedback to the control unit F, can easily be provided for in the software according to general criteria which are well within the competence of an expert in the art and which do not therefore require detailed description herein since they are not essential for an understanding of the present invention.

A further advantageous characteristic of the system according to the invention is that it can monitor the behaviour of the braking torque (and the corresponding power value) close to lowest rates of rotation (ω) of the engine M.

## Claims

1. A method for identifying limit conditions for the metering of fuel in internal combustion engines (M) with several cylinders, characterised in that it comprises the steps of:
- providing monitoring means (1, 5) which can identify a lack of combustion in the cylinders of the engine (M) by the detection (1, 5) of a variation in the torque (Cᵢ (ω)) delivered by the cylinder,
- providing means (2, F) for controlling the metering of the fuel for each of the cylinders;
- rotating (2) the engine with a generally rich mixture, and
- successively activating the control means (2, F) so as to cause a progressive weakening of the fuel mixture for each cylinder until the monitoring means (1, 5) identify, separately for each cylinder of the engine (M), a lack of combustion in that cylinder, the lack of combustion being indicative of the reaching of a fuel-metering limit condition in the cylinder, wherein after the identification of the fuel-metering limit condition, the control means (2, F) are activated so as to cause an enrichment of the fuel mixture in the corresponding cylinder in order to eliminate the lack of combustion in that cylinder.

2. A method according to Claim 1, characterised in that the lack of combustion is detected by the subjection (F) of the engine (M) to successive acceleration and deceleration cycles.

3. A method according to Claim 1 or Claim 2, characterised in that it includes the step of detecting the rate of rotation (ω) of the engine (M) at which the lack of combustion occurs.

4. A system for identifying limit conditions for the metering of fuel in internal combustion engines (M) with several cylinders, characterised in that it comprises:
- monitoring means (1, 5) which can identify a lack of combustion in the cylinders of the engine (M) by detecting a variation in the torque (Cᵢ (ω)) delivered by the cylinder,
- means (2, F) for controlling the metering of fuel to each cylinder and
- operating means (2) which cause (F) the engine to rotate with a generally rich mixture and successively activate the control means (2, F) so as to cause a progressive weakening of the fuel mixture to each cylinder until the monitoring means (1, 5) identify, separately for each cylinder of the engine (M), a lack of combustion in that cylinder, the lack of combustion being indicative of the reaching of a fuel-metering limit condition in that cylinder, wherein after the fuel-metering limit condition has been reached, the operating means (2) act on the control means (2, F) so as to cause an enrichment of the fuel mixture in the corresponding cylinder in order to eliminate the lack of combustion in that cylinder.

5. A system according to Claim 4, characterised in that the operating means (2, F) can cause the engine (M) to operate in successive acceleration and deceleration cycles and in that the means (1) for detecting the lack of combustion act during the cycles.

6. A system according to Claim 4 or Claim 5, characterised in that the monitoring means (1) detect the rate of rotation (ω) of the engine (M) at which the lack of combustion arises.

## Patentansprüche

1. Verfahren zum Erkennen von Grenzbedingungen für das Dosieren von Brennstoff in Brennkraftmotoren (M) mit mehreren Zylindern, **gekennzeichnet durch** die folgenden Schritte:
- es werden Überwachungsmittel (1, 5) vorgesehen, welche einen Mangel an Verbrennung in den Zylindern des Motors (M) durch das Erfassen (1, 5) einer Veränderung des von dem Zylinder abgegebenen Drehmoments (Cᵢ(ω)) erkennen können;
- es werden Mittel (2, F) zum Steuern des Dosierens des Brennstoffs für jeden der Zylinder vorgesehen;
- der Motor wird mit einem im allgemeinen fetten Gemisch gedreht (2); und
- die Steuermittel (2, F) werden in Folge betätigt, so daß sie ein fortschreitendes Abmagern des Brennstoffgemisches für jeden Zylinder verursachen, bis die Überwachungsmittel (1, 5), für jeden Zylinder des Motors (M) separat, einen Mangel an Verbrennung in dem Zylinder erkennen, wobei der Mangel an Verbrennung das Erreichen einer Brennstoffdosiergrenzbedingung in dem Zylinder anzeigt, und wobei nach dem Erkennen der Brennstoffdosiergrenzbedingung die Steuermittel (2, F) aktiviert werden, so daß sie ein Anreichern des Brennstoffgemisches in dem entsprechenden Zylinder verursachen, um den Mangel an Verbrennung in diesem Zylinder zu beseitigen.

2. Verfahren nach Anspruch 1, **dadurch gekennzeichnet**, daß der Mangel an Verbrennung dadurch erfaßt wird, daß der Motor (M) aufeinanderfolgenden Beschleunigungs- und Verzögerungszyklen unterworfen wird (F).

3. Verfahren nach Anspruch 1 oder 2, **dadurch gekennzeichnet**, daß es den Schritt des Erfassens der Umdrehungsrate (ω) des Motors (M), bei welcher der Mangel an Verbrennung auftritt, umfaßt.

4. Einrichtung zum Erkennen von Grenzbedingungen für das Dosieren von Brennstoff in Brennkraftmotoren (M) mit mehreren Zylindern, **gekennzeichnet durch**:
- Überwachungsmittel (1, 5), welche einen Mangel an Verbrennung in den Zylindern des Motors (M) durch das Erfassen einer Veränderung des von dem Zylinder abgegebenen Drehmoments (Cᵢ(ω)) erkennen können,
- Mittel (2, F) zum Steuern des Dosierens des Brennstoffs für jeden Zylinder, und
- Betätigungsmittel (2), welche bewirken (F), daß der Motor mit im allgemeinen fettem Gemisch dreht, und welche die Steuermittel (2, F) in Folge betätigen, so daß ein fortschreitendes Abmagern des Treibstoffgemisches für jeden Zylinder verursacht wird, bis die Überwachungsmittel (1, 5), für jeden Zylinder des Motors (M) separat, einen Mangel an Verbrennung in dem Zylinder erkennen, wobei der Mangel an Verbrennung das Erreichen einer Brennstoffdosiergrenzbedingung in dem Zylinder anzeigt, und wobei nach dem Erreichen der Brennstoffdosiergrenzbedingung das Betätigungsmittel (2) auf die Steuermittel (2, F) einwirkt, so daß ein Anreichern des Brennstoffgemisches in dem entsprechenden Zylinder verursacht wird, um den Mangel an Verbrennung in dem Zylinder zu beseitigen.

5. Einrichtung nach Anspruch 4, **dadurch gekennzeichnet**, daß die Betätigungsmittel (2, F) bewirken können, daß der Motor (M) in aufeinanderfolgenden Beschleunigungs- und Verzögerungszyklen läuft, und daß die Mittel (1) zum Erfassen des Mangels an Verbrennung während diesen Zyklen arbeiten.

6. Einrichtung nach Anspruch 4 oder 5, **dadurch gekennzeichnet**, daß die Überwachungsmittel (1) die Umdrehungsrate (ω) des Motors (M), bei welcher der Mangel an Verbrennung auftritt, erfassen.

## Revendications

1. Procédé d'identification de conditions à la limite pour le dosage du carburant dans des moteurs (M) à combustion interne ayant plusieurs cylindres, caractérisé en ce qu'il comprend les étapes suivantes :
- l'utilisation d'un dispositif (1, 5) de contrôle qui permet l'identification d'un défaut de combustion dans les cylindres du moteur (M) par détection (1, 5) de la variation du couple (Cᵢ(ω)) fourni par le cylindre,
- l'utilisation d'un dispositif (2, F) de réglage du dosage du carburant destiné à chacun des cylindres,
- la rotation (2) du moteur avec un mélange riche de façon générale, et
- l'activation successive du dispositif de commande (2, F) afin qu'un appauvrissement progressif du mélange de carburant destiné à chaque cylindre soit provoqué jusqu'à ce que le dispositif de contrôle (1, 5) identifie, séparément pour chaque cylindre du moteur (M), un défaut de combustion dans ce cylindre, le défaut de combustion étant représentatif du fait qu'une condition limite de dosage de carburant est atteinte dans le cylindre, et, après identification de la condition limite de dosage de carburant, le dispositif de commande (2, F) est activé afin qu'il provoque un enrichissement du mélange combustible dans le cylindre correspondant et que le défaut de combustion dans ce cylindre soit éliminé.

2. Procédé selon la revendication 1, caractérisé en ce que le défaut de combustion est détecté par mise du moteur (M) dans des cycles successifs d'accélération et de décélération (F).

3. Procédé selon la revendication 1 ou 2, caractérisé en ce qu'il comprend une étape de détection de la vitesse de rotation (ω) du moteur (M) pour laquelle le défaut de combustion se produit.

4. Ensemble d'identification de conditions à la limite pour le dosage du carburant dans les moteurs (M) à combustion interne ayant plusieurs cylindres, caractérisé en ce qu'il comprend :
- un dispositif (1, 5) de contrôle qui permet l'identification d'un défaut de combustion dans les cylindres du moteur (M) par détection d'une variation du couple (Cᵢ(ω)) fourni par le cylindre,
- un dispositif (2, F) de commande du dosage du carburant transmis à chaque cylindre, et
- un dispositif (2) de manoeuvre qui provoque (F) la rotation du moteur avec un mélange riche de façon générale et active successivement le dispositif de commande (2, F) afin qu'il provoque un affaiblissement progressif du mélange combustible transmis à chaque cylindre jusqu'à ce que le dispositif de contrôle (1, 5) identifie, séparément pour chaque cylindre du moteur (M), un défaut de combustion dans ce cylindre, le défaut de combustion étant représentatif de l'arrivée à une condition limite de dosage de carburant dans ce cylindre, et, après que la condition limite de dosage de carburant a été atteinte, le dispositif de manoeuvre (2) agit sur le dispositif de commande (2, F) afin qu'il provoque un enrichissement du mélange combustible dans le cylindre correspondant de manière que ce défaut de combustion dans ce cylindre soit éliminé.

5. Ensemble selon la revendication 4, caractérisé en ce que le dispositif de manoeuvre (2, F) peut provoquer le fonctionnement du moteur (M) dans des cycles successifs d'accélération et de décélération, et en ce que le dispositif (1) de détection du défaut de combustion agit pendant les cycles.

6. Ensemble selon la revendication 4 ou 5, caractérisé en ce que le dispositif de contrôle (1) détecte la vitesse de rotation (ω) du moteur (M) pour laquelle se produit le défaut de combustion.
